# EUROPEAN PATENT APPLICATION

(11) **EP 4 725 725 A1**
(43) Date of publication of application: **15.04.2026**
(21) Application number: 23952006.7
(22) Date of filing: 31.10.2023
(51) Int. Cl.: B60H 1/22, B60L 58/27

(54) **CONTROL METHOD AND APPARATUS FOR VEHICLE HEAT PUMP SYSTEM, VEHICLE, AND STORAGE MEDIUM**

(30) Priority: 12.09.2023 CN 202311182649
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: JIN, Xinliang, Hangzhou, Zhejiang 310051 (CN); FENG, Menglong, Hangzhou, Zhejiang 310051 (CN); LING, Xuefeng, Hangzhou, Zhejiang 310051 (CN); TU, Jianjun, Hangzhou, Zhejiang 310051 (CN)
(74) Representative: Boult Wade Tennant LLP
(86) International application number: PCT/CN2023/128372
(87) International publication number: WO 2025/055081

(57) **Abstract**

A method and an apparatus for controlling a vehicle heat pump system, and a vehicle and a storage medium, where the method for controlling the vehicle heat pump system (10) includes: acquiring an actual environmental temperature of a current environment where a vehicle is located; judging whether the actual environmental temperature is less than a preset cold start temperature; and if the actual environmental temperature is less than the preset cold start temperature, acquiring at least one current cold start parameter of the vehicle, determining an optimal heating mode of the vehicle according to the at least one current cold start parameter, and controlling the vehicle heat pump system (10) to heat the vehicle according to the optimal heating mode.

## Description

### CROSS-REFERENCE TO RELATED APPLICATIONS

The present disclosure claims priority to Chinese Patent Application No. 202311182649.5, filed on September 12, 2023 and entitled "METHOD AND APPARATUS FOR CONTROLLING VEHICLE HEAT PUMP SYSTEM, AND VEHICLE AND STORAGE MEDIUM", the contents of which are hereby incorporated by reference in its entirety.

### TECHNICAL FIELD

The present disclosure relates to the field of electric vehicle heating technology and, in particular, to a method and an apparatus for controlling a vehicle heat pump system, and a vehicle and a storage medium.

### BACKGROUND

How to minimize the energy consumption of vehicle thermal management and improve the overall vehicle range distance has become a key focus in the research of electric drive vehicles.

In the related art, when the environmental temperature is lower than -10°C, based on the refrigerant of an air conditioning system, the heating demands of the system is basically unable to be met. Additionally, in the related art, a direct heat pump solution is adopted. That is, when the environmental temperature is below -10°C, a PTC heater is used to heat a passenger compartment and a battery. When the environmental temperature is above -10°C, the passenger compartment is heated by the heat pump that absorbs heat from the outside environment. When the battery heating power is high, the PTC heater is used for heating. When the heating demand power is low, the waste heat from the electric drive unit is used to heat the battery.

However, in the related art, the thermal management of various vehicle components is independent of each other. This easily leads to energy waste and high overall power consumption, thereby affecting the vehicle's range and reducing the driving experience of users. This needs to be improved.

### SUMMARY

The present disclosure provides a method and an apparatus for controlling a vehicle heat pump system, and a vehicle and a storage medium. The method can determine an optimal heating mode according to current cold start parameters of the vehicle when an actual environmental temperature is less than a preset cold start temperature, thereby controlling the heat pump system to heat the vehicle according to the optimal heating mode, with the comprehensive parameters and the heating demand of the vehicle taken into consideration, so as to save heating energy consumption and improve vehicle range, and increase the driving experience of users.

In a first aspect, a method for controlling a vehicle heat pump system is provided. The method includes the following steps: acquiring an actual environmental temperature of a current environment where a vehicle is located; judging whether the actual environmental temperature is less than a preset cold start temperature; and if the actual environmental temperature is less than the preset cold start temperature, acquiring at least one current cold start parameter of the vehicle, determining an optimal heating mode of the vehicle according to the at least one current cold start parameter, and controlling the heat pump system to heat the vehicle according to the optimal heating mode.

With the above technical solution, when the actual environmental temperature is less than the preset cold start temperature, the optimal heating mode can be determined according to the current cold start parameter of the vehicle, thereby controlling the heat pump system to heat the vehicle according to the optimal heating mode, with the comprehensive parameters and the heating demand of the vehicle taken into consideration, so as to save heating energy consumption and improve vehicle range, and increase the driving experience of users.

In combination with the first aspect, in some possible implementations, the at least one current cold start parameter includes at least one of current discharge power of a power battery, a current outlet water temperature of a chiller chiller, and a current water temperature of the power battery.

In combination with the first aspect, in some possible implementations, the determining the optimal heating mode of the vehicle according to the at least one current cold start parameter includes: judging whether a current battery discharge power of the vehicle is limited; if the current battery discharge power of the vehicle is limited, the optimal heating mode is to respond to a heating request of a passenger compartment and/or a battery; if the current battery discharge power of the vehicle is not limited, the optimal heating mode is to respond to a heating request of a passenger compartment.

With the above technical solution, whether the current discharge power of the vehicle is limited can be judged, and when the current discharge power is limited, respond to the heating request of the passenger compartment and/or the battery, otherwise respond to the heating request of the passenger compartment.

In combination with the first aspect, in some possible implementations, in a case of responding to the heating request of the passenger compartment and/or the battery, the controlling the heat pump system to heat the vehicle according to the optimal heating mode includes: judging whether the current outlet water temperature is greater than the actual environmental temperature; if the current outlet water temperature is less than or equal to the actual environmental temperature, controlling the heat pump system to enter a first preset operation mode; if the current outlet water temperature is greater than the environmental temperature, judging whether the current outlet water temperature meets a first preset temperature condition; and when the current outlet water temperature does not meet the first preset temperature condition, controlling the heat pump system to enter a second preset operation mode, otherwise controlling the heat pump system to enter a third preset operation mode; where compressor power consumption in the first preset operation mode is greater than compressor power consumption in the second preset operation mode, and the compressor power consumption in the second preset operation mode is greater than compressor power consumption in the third preset operation mode.

With the above technical solution, when the current discharge power is limited, an operation mode of the heat pump system can be determined according to parameters such as the current outlet water temperature, the actual environmental temperature, etc., thereby saving energy consumption and ensuring range.

In combination with the first aspect, in some possible implementations, in a case of responding to the heating request of the passenger compartment, the controlling the heat pump system to heat the vehicle according to the optimal heating mode includes: judging whether the current outlet water temperature is greater than the actual environmental temperature; if the current outlet water temperature is less than or equal to the actual environmental temperature, controlling the heat pump system to enter a fourth preset operation mode; if the current outlet water temperature is greater than the actual environmental temperature, judging whether the current outlet water temperature meets a second preset temperature condition; and when the current outlet water temperature does not meet the second preset temperature condition, controlling the heat pump system to enter a fifth preset operation mode, otherwise controlling the heat pump system to enter a third preset operation mode; where compressor power consumption in the fifth preset operation mode is greater than compressor power consumption in the fourth preset operation mode, and the compressor power consumption in the fourth preset operation mode is greater than compressor power consumption in the third preset operation mode.

With the above technical solution, when the current discharge power is not limited, an operation mode of the heat pump system can be determined according to parameters such as the current outlet water temperature, the actual environmental temperature, etc., thereby saving energy consumption and ensuring range.

In combination with the first aspect, in some possible implementations, in a case of responding to a heating instruction of the passenger compartment, the controlling the heat pump system to heat the vehicle according to the optimal heating mode also includes: when a current operation mode of the heat pump system is the fourth preset operation mode, judging whether the current battery discharge power of the vehicle is limited; if the current discharge power meets or does not meet the preset battery management intervention condition, controlling the heat pump system to enter the first preset operation mode.

With the above technical solution, the battery discharge power can be monitored in real time during a driving process of the vehicle, and the operation mode of the heat pump system can be switched when the battery discharge power changes from not limited to limited.

In combination with the first aspect, in some possible implementations, in a case of responding to the heating instruction of the passenger compartment, the controlling the heat pump system to heat the vehicle according to the optimal heating mode also includes: when a current operation mode of the heat pump system is the fifth preset operation mode, judging whether the current discharge power meets the preset battery management intervention condition; if the current discharge power meets or does not meet the preset battery management intervention condition, controlling the heat pump system to enter the second preset operation mode.

With the above technical solution, the battery discharge power can be monitored in real time during a driving process of the vehicle, and the operation mode of the heat pump system can be switched when the battery discharge power changes from not limited to limited.

In a second aspect, an apparatus for controlling a vehicle heat pump system is provided. The apparatus includes: an acquiring module, configured to acquire an actual environmental temperature of a current environment where a vehicle is located; a judging module, configured to judge whether the actual environmental temperature is less than a preset cold start temperature; and a controlling module, configured to, when the actual environmental temperature is less than the preset cold start temperature, acquire at least one current cold start parameter of the vehicle, determine an optimal heating mode of the vehicle according to the at least one current cold start parameter, and control the heat pump system to heat the vehicle according to the optimal heating mode.

In combination with the second aspect and the above implementations, in some possible implementations, the at least one current cold start parameter includes at least one of current discharge power of a power battery, a current outlet water temperature of a chiller chiller, and a current water temperature of the power battery.

In combination with the second aspect, in some possible implementations, the controlling module includes: a first judging unit, configured to judge whether a current battery discharge power of the vehicle is limited; a first response unit, configured such that when the current battery discharge power of the vehicle is limited, the optimal heating mode is to respond to a heating request of a passenger compartment and/or a battery; a second response unit, configured such that when the current battery discharge power of the vehicle is not limited, the optimal heating mode is to respond to a heating request of a passenger compartment.

In combination with the second aspect, in some possible implementations, the controlling module includes: a second judging unit, configured to judge whether the current outlet water temperature is greater than the actual environmental temperature; a first controlling unit, configured to control the heat pump system to enter a first preset operation mode when the current outlet water temperature is less than or equal to the actual environmental temperature; a second controlling unit, configured to judge whether the current outlet water temperature meets a first preset temperature condition when the current outlet water temperature is greater than the environmental temperature, and control the heat pump system to enter a second preset operation mode when the current outlet water temperature does not meet the first preset temperature condition, otherwise control the heat pump system to enter a third preset operation mode; where compressor power consumption in the first preset operation mode is greater than compressor power consumption in the second preset operation mode, and the compressor power consumption in the second preset operation mode is greater than compressor power consumption in the third preset operation mode.

In combination with the second aspect, in some possible implementations, the controlling module includes: a third judging unit, configured to judge whether the current outlet water temperature is greater than the actual environmental temperature; a third controlling unit, configured to control the heat pump system to enter a fourth preset operation mode when the current outlet water temperature is less than or equal to the actual environmental temperature; a fourth controlling unit, configured to judge whether the current outlet water temperature meets a second preset temperature condition when the current outlet water temperature is greater than the actual environmental temperature, and control the heat pump system to enter a fifth preset operation mode when the current outlet water temperature does not meet the second preset temperature condition, otherwise control the heat pump system to enter a third preset operation mode; where compressor power consumption in the fifth preset operation mode is greater than compressor power consumption in the fourth preset operation mode, and the compressor power consumption in the fourth preset operation mode is greater than compressor power consumption in the third preset operation mode.

In combination with the second aspect, in some possible implementations, the controlling module also includes: a fourth judging unit, configured to judge whether the current battery discharge power of the vehicle is limited when a current operation mode of the heat pump system is the fourth preset operation mode; a fifth controlling unit, configured to control the heat pump system to enter the first preset operation mode when the current discharge power meets or does not meet a preset battery management intervention condition.

In combination with the second aspect, in some possible implementations, the controlling module also includes: a fifth judging unit, configured to judge whether the current discharge power meets a preset battery management intervention condition when a current operation mode of the heat pump system is the fifth preset operation mode; a sixth controlling unit, configured to control the heat pump system to enter the second preset operation mode when the current discharge power meets or does not meet the preset battery management intervention condition.

In a third aspect, a vehicle is provided, which includes: a memory, a processor, and a computer program stored in the memory and executable on the processor, the processor executes the program to implement the method described in the first aspect or any possible implementation of the first aspect.

In a fourth aspect, a computer-readable storage medium is provided, the computer-readable storage medium stores a computer program, when the program is executed by a processor, the method described in the first aspect or any possible implementation of the first aspect is implemented.

### BRIEF DESCRIPTION OF DRAWINGS

FIG. 1 is a schematic structural diagram of a vehicle heat pump system of an embodiment of the present disclosure.
FIG. 2 is a schematic diagram 1 of principle of a vehicle heat pump system of an embodiment of the present disclosure.
FIG. 3 is a schematic diagram 2 of principle of a vehicle heat pump system of an embodiment of the present disclosure.
FIG. 4 is a schematic diagram 3 of principle of a vehicle heat pump system of an embodiment of the present disclosure.
FIG. 5 is a schematic diagram 4 of principle of a vehicle heat pump system of an embodiment of the present disclosure.
FIG. 6 is a schematic diagram 5 of principle of a vehicle heat pump system of an embodiment of the present disclosure.
FIG. 7 is a flowchart of a method for controlling a vehicle heat pump system provided by an embodiment of the present disclosure.
FIG. 8 is a flowchart of a method for controlling a vehicle heat pump system in an embodiment of the present disclosure.
FIG. 9 is a schematic structural diagram of an apparatus for controlling a vehicle heat pump system in an embodiment of the present disclosure.
FIG. 10 is a schematic structural diagram of a vehicle in an embodiment of the present disclosure.

### Description of reference numerals:

10 - Vehicle Heat Pump System, 101 - Expansion Tank, 102 - Radiator, 103 - Electric Drive Unit, 104 - Water-Cooled Condenser, 105 - Fluid storage tank, 106 - Compressor, 107 - Heater Core, 108 - Evaporator, 109 - Blower, 110 - Inner/Outer Air Mode Damper Motor, 111 - Chiller Chiller, 112 - Battery, 201 - Temperature Sensor, 202 - Pressure Sensor, 203 - Pressure-Temperature Sensor, 301 - Nine-Way Valve, 302 - Three-Way, 303 - Check Valve, 304 - Four-Way, BCPM - Battery Coolant Pump Module, EDCP - Electric Drive Circuit Pump, HCPM - Heater Core Pump Module, MV - Manual Valve, EVX - Expansion Valve, SOV1 - First Solenoid Operated Valve, SOV2 - Second Solenoid Operated Valve, SOV3 - Third Solenoid Operated Valve, EEXV - Evaporator Expansion Valve, BEXV - Battery Cooling Expansion Valve, HCTV - Hydraulic Control Throttle Valve; 90 - Controlling for a Vehicle Heat Pump System, 901 - Acquiring Module, 902 - Judging Module, 903 - Controlling Module.

### DESCRIPTION OF EMBODIMENTS

The following will describe the technical solution in the present disclosure in a clear and detailed manner, with reference to the attached figures. In the description of embodiments of the present disclosure, unless otherwise stated, the "/" symbol indicates "or", for example, A/B can represent either A or B. In the text, "and/or" merely indicates an association relationship of the associated object, meaning that there can be three relationships, such as A and/or B, which can represent: A exists alone, A and B exist simultaneously, or B exists alone. Additionally, in the description of the embodiments of the present disclosure, "multiple" refers to two or more.

Hereinafter, the terms "first" and "second" are used merely for descriptive purposes and should not be construed as implying or suggesting relative importance or implicitly indicating the number of the indicated technical features. Therefore, the features limited by "first" or "second" can be explicitly or implicitly included as one or more of those features.

In the related art, when the environmental temperature is lower than -10°C, based on the refrigerant of an air conditioning system, the heating demands of the system is basically unable to be met. Additionally, in the related art, a direct heat pump solution is adopted. That is, when the environmental temperature is below -10°C, a PTC heater is used to heat a passenger compartment and a battery. When the environmental temperature is above -10°C, the passenger compartment is heated by the heat pump that absorbs heat from the outside environment. When the battery heating power is high, the PTC heater is used for heating. When the heating demand power is low, the waste heat from the electric drive unit is used to heat the battery.

However, in the related art, the thermal management of various vehicle components is independent of each other. This easily leads to energy waste and high overall power consumption, thereby affecting the vehicle's range and reducing the driving experience of users. This needs to be improved.

Therefore, the present disclosure proposes a method for controlling a vehicle heat pump system to solve the above problems.

Before description of the method for controlling the vehicle heat pump system described in the embodiments of the present disclosure, structures involved in the embodiments of the present disclosure are described.

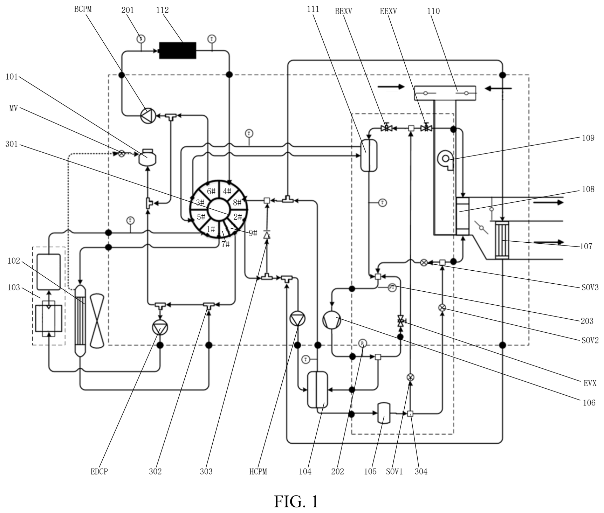

As shown in FIG. 1, in the application of the embodiments of the present disclosure, an adopted vehicle heat pump system 10 can include: an expansion tank 101, a radiator 102, an electric drive unit 103, a water-cooled condenser 104, a receiver/dryer 105, a compressor 106, a heater core 107, an evaporator 108, a blower 109, an inner/outer air mode damper motor 110, a chiller chiller 111 and a battery 112; a temperature sensor 201, a pressure sensor 202 and a pressure-temperature sensor 203; a nine-way valve 301, a three-way 302, a check valve 303, a four-way 304, a battery coolant pump module BCPM, an electric drive circuit pump EDCP, a heater core pump module HCPM, a manual valve MV, an expansion valve EVX, a first solenoid operated valve SOV1, a second solenoid operated valve SOV2, a third solenoid operated valve SOV3, an evaporator expansion valve EEXV and a battery cooling expansion valve BEXV.

During the actual application process, the vehicle heat pump system 10 can switch to different operation modes according to an environmental temperature and the waterway temperature changes during a driving process of the vehicle.

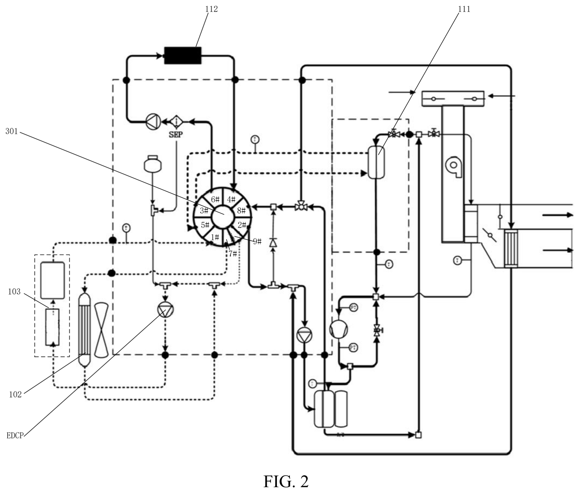

Combined with FIG. 2 to FIG. 6, which are schematic diagrams of working principle of the vehicle heat pump system 10 in different operation modes.

As shown in FIG. 2, which is a first preset operation mode of the vehicle heat pump system 10 in an embodiment of the present disclosure.

In the first preset operation mode, at this time, a waterway circulation can be: going straight through the electric drive unit 103 to absorb heat from the electric drive unit 103 and the environment, where the waterway is a thickened dotted line. Flowing out from port 7 of the nine-way valve 301 to the radiator 102, passing through the electric drive circuit pump EDCP to the electric drive unit 103, returning to port 1 which is connected to port 3, flowing out from the port 3, passing through the chiller chiller 111, returning to port 5, then flowing from the port 5 to the port 7, to achieve a heat absorption circuit.

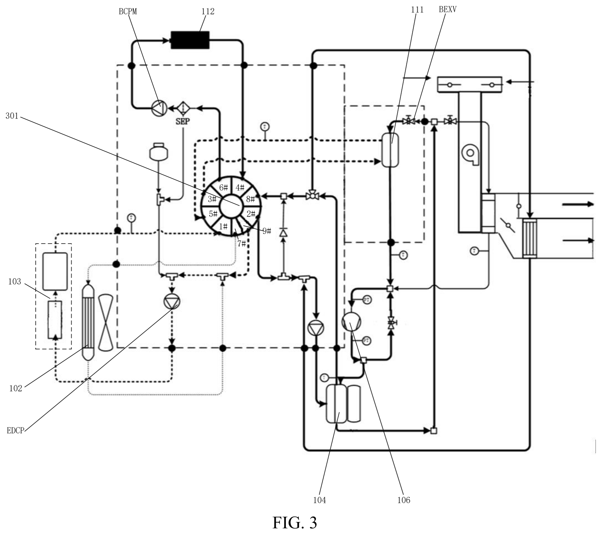

As shown in FIG. 3, which is a second preset operation mode of the vehicle heat pump system 10 in an embodiment of the present disclosure.

In the second preset operation mode, a waterway circulation can be: flowing out from port 9 of the nine-way valve 301, passing through the electric drive unit 103 and returning to port 1, then going from port 1 to port 3, passing through the chiller chiller 111, and returning to port 5, where port 5 and port 9 are interconnected. At this time, the compressor 106 starts, as shown by a thick line in FIG. 3, after leaving the compressor 106, entering the water-cooled condenser 104, then entering the battery cooling expansion valve BEXV, passing through the chiller chiller 111 to recover waste heat, and returning to the compressor 106.

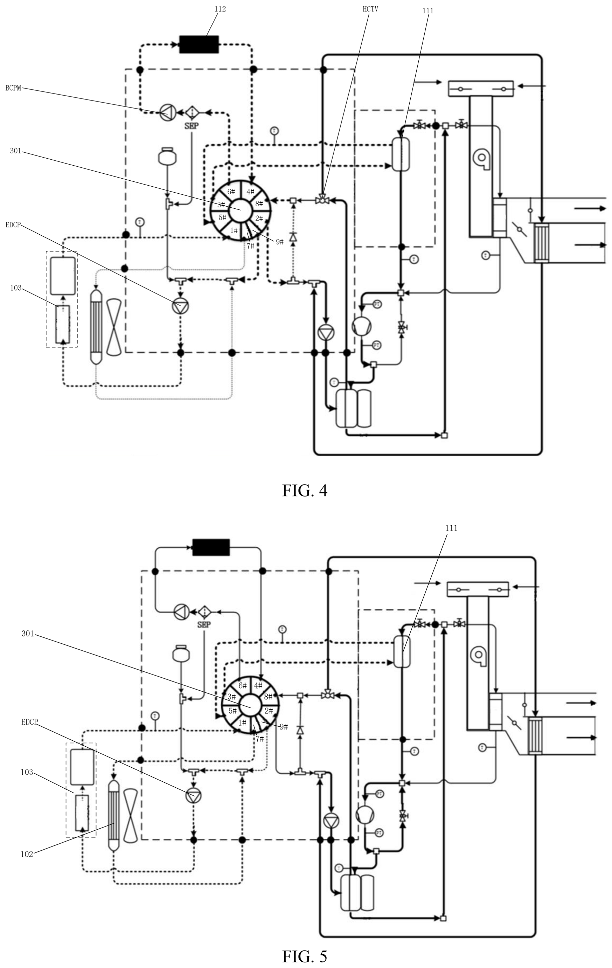

As shown in FIG. 4, which is a third preset operation mode of the vehicle heat pump system 10 in an embodiment of the present disclosure.

In the third preset operation mode, a waterway circulation can be: flowing out from port 9 of the nine-way valve 301, passing through the electric drive circuit pump EDCP and the electric drive unit 103, to port 1, then from port 1 to port 2, flowing out from port 2, passing through the check valve to port 8 which is connected to port 6, entering the battery through the battery coolant pump module BCPM, and then returning to port 4, passing from port 4 to port 3, flowing out from port 3, passing through the chiller chiller 111, returning to port 5 which is connected to port 9. In this mode, the hydraulic control throttle valve HCTV only allows warm air to pass through.

As shown in FIG. 5, which is a fourth preset operation mode of the vehicle heat pump system 10 in an embodiment of the present disclosure.

In the fourth preset operation mode, a waterway circulation process can be: starting from port 7 of the nine-way valve 301, entering the radiator 102 to absorb heat, passing through the electric drive circuit pump EDCP to enter the electric drive unit 103 for heat absorption, returning to port 1 which is connected to port 3, flowing out from port 3, entering the chiller chiller 111, flowing out from the chiller chiller 111 and returning to port 5 which is connected to port 7, to achieve an entire waste heat recovery process.

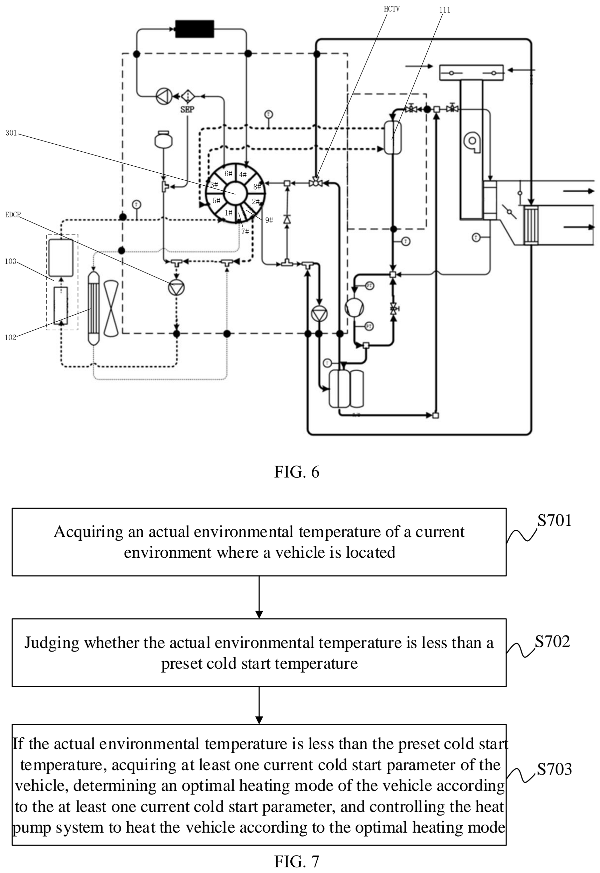

As shown in FIG. 6, which is a fifth preset operation mode of the vehicle heat pump system 10 in an embodiment of the present disclosure.

In the fifth preset operation mode, a waterway circulation process can be: flowing out from port 9 of the nine-way valve 301, passing through the electric drive circuit pump EDCP to electric drive unit 103, returning to port 1 which is connected to port 2, flowing out from port 2 and returning to port 8, then going through port 6, entering battery 112 from port 6, to directly heat the battery 112, after heating, returning to port 4 which is connected to port 3, flowing to chiller chiller 111 to recover the waste heat of a refrigeration machine, then returning to port 5 which is connected to port 9. At this time, the hydraulic control throttle valve HCTV is connected to the heater core.

In the embodiment of the present disclosure, the vehicle heat pump system 10 described above is adopted, with a mode of a heater core plus a water-cooling system adopted, which can integrate a heat management among the battery, the electric drive unit, the heater core, and the environment, thereby supporting the method for controlling the vehicle heat pump system described in the embodiments of the present disclosure. Based on the waterway temperature changes, a corresponding heating mode can be selected, which can save the energy consumption of the thermal management system and improve the overall vehicle range distance.

Illustratively, as shown in FIG. 7, a method for controlling a vehicle heat pump system includes the following steps.

In step S701, acquiring an actual environmental temperature of a current environment where a vehicle is located.

It can be understood that when an external environmental temperature of the vehicle is low, compared to a case of the normal temperature, the vehicle needs an additional running process for starting, for example, it needs to heat the power battery. Therefore, in the embodiment of the present disclosure, the actual environmental temperature of the current environment can be acquired by sensors of the vehicle to determine a startup strategy of the vehicle based on the actual environmental temperature.

In step S702, judging whether the actual environmental temperature is less than a preset cold start temperature.

During an actual execution process, the embodiment of the present disclosure can judge whether the acquired actual environmental temperature is less than the preset cold start temperature, that is, when the actual environmental temperature is less than the preset cold start temperature, the vehicle needs to enter a cold start mode for starting. Here, the preset cold start temperature can be 0°C, or can be set by the technical personnel in the field according to an actual situation. No specific restrictions are made here.

In step S703, if the actual environmental temperature is less than the preset cold start temperature, acquiring at least one current cold start parameter of the vehicle, determining an optimal heating mode of the vehicle according to the at least one current cold start parameter, and controlling the heat pump system to heat the vehicle according to the optimal heating mode, where the at least one current cold start parameter includes at least one of current discharge power of a power battery, a current outlet water temperature of a chiller chiller, and a current water temperature of the power battery.

As a possible implementation, when the actual environmental temperature is less than the preset cold start temperature, the vehicle enters the cold start mode, and then acquires at least one cold start-related parameter of the vehicle in real time, so as to determine or switch the optimal heating mode of the vehicle according to a dynamic change of the cold start-related parameters, thereby controlling the heat pump system to heat the vehicle according to the optimal heating mode.

The at least one current cold start parameter can include the current discharge power of the power battery, the current outlet water temperature of the chiller chiller, and the current water temperature of the power battery, etc., so as to determine a water temperature state inside the vehicle in real time based on the current cold start parameter of the vehicle, and achieve heat transfer through adjusting the waterway circulation, thereby reducing energy consumption.

Optionally, in an embodiment of the present disclosure, the determining the optimal heating mode of the vehicle according to the at least one current cold start parameter includes: judging whether a current battery discharge power of the vehicle is limited; if the current battery discharge power of the vehicle is limited, the optimal heating mode is to respond to a heating request of a passenger compartment and/or a battery; if the current battery discharge power of the vehicle is not limited, the optimal heating mode is to respond to a heating request of a passenger compartment.

In some embodiments, based on parameters such as the current discharge power of the power battery, etc., that whether the current battery discharge power of the vehicle is limited can be judged. When the current battery discharge power is judged to be limited, for example, when the SOC (state of charge, state of charge) is lower than 40% and a battery discharge power limitation is triggered, the optimal heating mode of the present disclosure is to respond to the heating request of the passenger compartment and/or the battery; conversely, when the current battery discharge power is not limited, for example, when the battery is fully charged and the power output is not limited, the present disclosure can ignore a heating request of the battery and only respond to the heating request of the passenger compartment.

Optionally, in an embodiment of the present disclosure, in a case of responding to the heating request of the passenger compartment and/or the battery, the controlling the heat pump system to heat the vehicle according to the optimal heating mode includes: judging whether the current outlet water temperature is greater than the actual environmental temperature; if the current outlet water temperature is less than or equal to the actual environmental temperature, controlling the heat pump system to enter a first preset operation mode; if the current outlet water temperature is greater than the environmental temperature, judging whether the current outlet water temperature meets a first preset temperature condition, and when the current outlet water temperature does not meet the first preset temperature condition, controlling the heat pump system to enter a second preset operation mode, otherwise controlling the heat pump system to enter a third preset operation mode; where compressor power consumption in the first preset operation mode is greater than compressor power consumption in the second preset operation mode, and the compressor power consumption in the second preset operation mode is greater than compressor power consumption in the third preset operation mode.

As a possible implementation, the embodiment of the present disclosure can judge whether the current outlet water temperature is greater than the actual environmental temperature. When the outlet water temperature is less than the environmental temperature, the radiator performs heat dissipation, and the embodiment of the present disclosure can control the heat pump system to enter the first preset operation mode as described in the above embodiment, as shown in FIG. 2, to achieve the heat absorption circuit.

When the outlet water temperature is higher than the environmental temperature, the embodiment of the present disclosure can judge how much it is higher than the environmental temperature, that is, judging whether the current outlet water temperature meets the first preset temperature condition. When the outlet water temperature is higher than the environmental temperature and lower than the battery temperature, the embodiment of the present disclosure cannot directly heat the battery. At this time, the embodiment of the present disclosure can control the heat pump system to enter the second preset operation mode as shown in FIG. 3, where the second preset operation mode is different form the first preset operation mode in that the circulating waterway does not pass through the radiator. In the first preset operation mode and the second preset operation mode, the hydraulic control throttle valve HCTV can adjust the proportion according to the battery temperature.

When the current outlet water temperature meets the first preset temperature condition, for example, when the outlet water temperature is greater than 0°C and greater than a battery water temperature by 5°C, the embodiment of the present disclosure can control the heat pump system to enter the third preset operation mode as shown in FIG. 4. In this mode, the outlet water temperature has sufficient heat, is higher than the battery water temperature, and such hot water can be used to heat the battery 112.

In summary, the embodiments of the present disclosure can divide the heating process of the vehicle into three stages during the vehicle's start-up to driving process based on the changes of the outlet water temperature and the battery water temperature.

Early stage: large load heating of the passenger compartment, heating of the passenger compartment is given priority, with battery discharging to increase internal temperature.

Mid-term stage: medium load of the passenger compartment, comfort of the passenger compartment is given priority, with battery discharging to increase internal temperature + the waste heat from the electric drive unit used for heating and temperature increase.

Late stage: low load of the passenger compartment, high load of the battery, heat pump absorbs the waste heat from the electric drive unit 103, with the comfort of the passenger compartment and the heating of the battery simultaneously met.

Under this control logic, the embodiments of the present disclosure can flexibly utilize the waste heat from the electric drive unit 103 to reduce heating load of the system at each stage, and reduce the compressor power.

Optionally, in an embodiment of the present disclosure, in a case of responding to the heating request of the passenger compartment, the controlling the heat pump system to heat the vehicle according to the optimal heating mode includes: judging whether the current outlet water temperature is greater than the actual environmental temperature; if the current outlet water temperature is less than or equal to the actual environmental temperature, controlling the heat pump system to enter a fourth preset operation mode; if the current outlet water temperature is greater than the actual environmental temperature, judging whether the current outlet water temperature meets a second preset temperature condition, and when the current outlet water temperature does not meet the second preset temperature condition, controlling the heat pump system to enter a fifth preset operation mode, otherwise controlling the heat pump system to enter a third preset operation mode; where compressor power consumption in the fifth preset operation mode is greater than compressor power consumption in the fourth preset operation mode, and the compressor power consumption in the fourth preset operation mode is greater than compressor power consumption in the third preset operation mode.

During the actual execution process, the embodiments of the present disclosure can judge whether the current outlet water temperature is greater than the actual environmental temperature in a case where the output power of the power battery is not limited.

For example, when the vehicle enters the cold start mode, the electric drive unit has no waste heat, and the outlet water temperature of the chiller chiller is lower than the environmental temperature. When the actual environmental temperature is below - 7°C, the embodiment of the present disclosure can control the heat pump system to enter the fourth preset operation mode as shown in FIG. 5, absorbing heat from the environment and opening the expansion valve EVX to increase the heat generation of the compressor.

For example, when the actual environmental temperature is above -7°C, at this time, the embodiment of the present disclosure may, as default, not to open the expansion valve EXV to reduce the power consumption of the compressor. At this time, as the vehicle is driving, the electric drive unit generates heat, and the outlet water temperature of the chiller chiller is monitored. When the outlet water temperature does not meet the second preset temperature condition, for example, when the outlet water temperature is higher than the actual environmental temperature but not higher than the battery water temperature by 5°C, to avoid the heat generated by the electric drive unit from being dissipated into the environment, the embodiment of the present disclosure can control the heat pump system to enter the fifth preset operation mode as shown in FIG. 6. During this process, since the battery discharges continuously, and its own temperature keeps rising, that is, after heat recovery, the temperature of the chiller chiller is high enough. At this time, there is no need to increase a rotation speed of the compressor, but first heat the battery, then the heat recovered through the chiller chiller is used to heat the passenger compartment, and reduce the rotation speed of the compressor.

Further, in the above situation, due to the battery discharging and the passive thermal management of the battery, the battery temperature will rise to a relatively high temperature. When the outlet water temperature of the chiller chiller is higher than 5°C and not higher than the battery water temperature by 5°C, the embodiment of the present disclosure can control the heat pump system to enter the second preset operation mode from the fifth preset operation mode. At this time, the outlet water of the electric drive unit directly goes to the chiller, and the heat pump system works to increase the rotation speed of the compressor, and recover more heat from the chiller for heating the passenger compartment and the battery.

The vehicle continues to drive. At this time, the heating load of the passenger compartment decreases, the heat generated by the electric drive unit gradually increases, and the outlet water temperature of the electric drive unit gradually rises. When the outlet water temperature of the chiller chiller meets the second preset temperature condition, such as being higher than 5°C and higher than the battery water temperature by 5°C, the embodiment of the present disclosure can control the heat pump system to enter the third preset operation mode. At this time, the outlet water of the electric drive unit goes to the battery first and then to the chiller chiller. The hot water from the electric drive unit can directly heat the battery, reducing the power consumption of the compressor.

It should be noted that in this mode, the embodiment of the present disclosure merely provides passive heating to the battery, rather than responding to the battery's active heating.

Optionally, in an embodiment of the present disclosure, in a case of responding to a heating instruction of the passenger compartment, the controlling the heat pump system to heat the vehicle according to the optimal heating mode also includes: when a current operation mode of the heat pump system is the fourth preset operation mode, judging whether the current battery discharge power of the vehicle is limited; if the current battery discharge power is limited or not limited, controlling the heat pump system to enter the first preset operation mode.

It can be understood that when the vehicle is driving, power consumption of the power battery will be caused, and when the discharge power of the power battery changes from not limited to limited, the operation mode of the heat pump system also needs to be changed accordingly.

In some embodiments, when the current operation mode of the heat pump system is the fourth preset operation mode and the discharge power of the power battery changes from not limited to limited, the embodiment of the present disclosure can control the heat pump system to enter the first preset operation mode to reduce power consumption and prolong the range.

Optionally, in an embodiment of the present disclosure, in a case of responding to the heating instruction of the passenger compartment, the controlling the heat pump system to heat the vehicle according to the optimal heating mode also includes: when a current operation mode of the heat pump system is the fifth preset operation mode, judging whether the current battery discharge power of the vehicle is limited; if the current battery discharge power of the vehicle is limited or not limited, controlling the heat pump system to enter the second preset operation mode.

In some other embodiments, when the current operation mode of the heat pump system is the fifth operation mode and the discharge power of the power battery changes from not limited to limited, the embodiment of the present disclosures can control the heat pump system to enter the second preset operation mode to reduce power consumption and prolong the range.

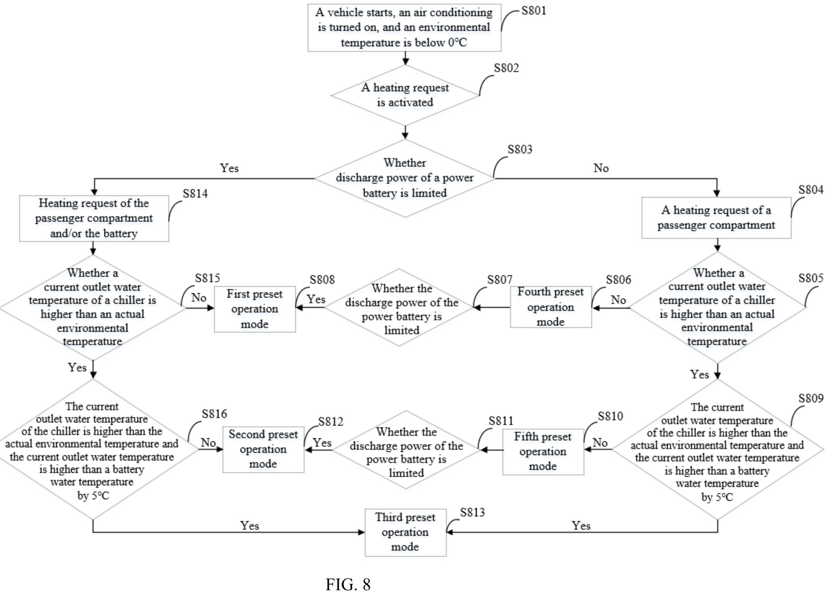

Next, a working principle of the method for controlling the vehicle heat pump system of the embodiments of the present disclosure will be described in detail with a specific embodiment. During an actual execution, the heat pump system of the embodiments of the present disclosure can realize the selection and switching of operation modes during a driving process of the vehicle, specifically, as shown in FIG. 8.

As shown in FIG. 8, the embodiment of the present disclosure can include the following steps:
Step S801: the vehicle starts, an air conditioning is turned on, and the environmental temperature is below 0°C. In a low-temperature environment (below 0°C), the vehicle starts, and it can be determined that the vehicle is in a cold start state. At this time, the air conditioning is turned on with a heating demand.
Step S802: the heating request is activated.
Step S803: judging whether the discharge power of the power battery is limited. If the discharge power of the power battery is limited, enter S814, otherwise enter S804.
Step S804: responding to the heating request of the passenger compartment. When the state of charge SOC of the battery is 100%, due to full charge of capacity of the battery, the power output is not limited. In the control of this system, at this time, the heating request of the battery is ignored and only the thermal management request of the passenger compartment is responded to.
Step S805: judging whether the current outlet water temperature of the chiller chiller is higher than the actual environmental temperature. If the current outlet water temperature is higher than the actual environmental temperature, entering S809, otherwise entering S806.
Step S806: controlling the heat pump system to enter the fourth preset operation mode. During vehicle cold start, the electric drive unit has no waste heat. For example, the current environmental temperature is below -7°C, the heat pump system is controlled to enter the fourth preset operation mode to absorb heat from the environment and the expansion valve EXV is opened to increase the heat generation of the compressor. If the current environmental temperature is above -7°C, the expansion valve EXV is not opened by default to reduce the power consumption of the compressor.
Step S807: judging whether the discharge power of the power battery is limited. If the discharge power of the power battery is limited, entering S808, otherwise maintaining the current operation mode of the heat pump system.
Step S808: controlling the heat pump system to switch to the first preset operation mode.
Step S809: judging whether the current outlet water temperature of the chiller chiller is higher than the actual environmental temperature and whether the current outlet water temperature is higher than the battery water temperature by 5°C. If the current outlet water temperature is higher than the actual environmental temperature and is also higher than the battery water temperature by 5°C, entering S813, otherwise entering S810.
Step S810: controlling the heat pump system to enter the fifth preset operation mode. As the vehicle is driving, the electric drive unit generates heat, and the outlet water temperature of the chiller chiller is monitored. If the outlet water temperature is higher than the actual environmental temperature, the heat pump system is controlled to enter the fifth preset operation mode to avoid the heat generated by the electric drive unit from being dissipated into the environment.

During this process, since the battery discharges continuously, and its own temperature keeps rising.

Step S811: judging whether the discharge power of the power battery is limited. If the discharge power of the power battery is limited, entering S812, otherwise maintaining the current operation mode of the heat pump system.

Step S812: controlling the heat pump system to switch to the second preset operation mode.

Step S813: controlling the heat pump system to enter the third preset operation mode. The vehicle continues to drive, the heating load of the passenger compartment decreases, and the heat generated by the electric drive unit gradually increases, and the outlet water temperature of the electric drive unit gradually rises. When the outlet water temperature of the chiller chiller is higher than 5°C and is higher than the battery water temperature by 5°C, the heat pump system is controlled to enter the third preset operation mode. At this time, the outlet water of the electric drive unit goes to the battery first and then to the chiller chiller. The hot water from the electric drive unit directly heats the battery, reducing the power consumption of the compressor.

In this mode, the embodiment of the present disclosure merely provides passive heating to the battery, rather than responding to the battery's active heating. Due to the previous battery discharging and the current passive thermal management, the battery temperature will rise to a relatively high temperature.

When the outlet water temperature of the chiller is higher than 5°C and not higher than the battery water temperature by 5°C, the heat pump system is controlled to switch to the second preset operation mode. At this time, the outlet water of the electric drive unit directly goes to the chiller chiller, and the heat pump system works to increase the rotation speed of the compressor, and recover more heat from the chiller chiller for heating the passenger compartment and the battery.

Step S814: responding to the heating request of the passenger compartment and/or the battery. This mode has responded to a battery's active heating request. The battery inlet temperature has reached 40°C, which can quickly increase the battery temperature and improve the discharge efficiency.

During this process, when the SOC is lower than 40% and a battery discharge power limitation is triggered, the operation mode of the heat pump system switches based on the waterway state at that time.

Under this control strategy, dynamic changes of the system for heating in each stage are as follows:
Early stage: large load heating of the passenger compartment, heating of the passenger compartment is given priority, with battery discharging to increase internal temperature.

Mid-term stage: medium load of the passenger compartment, comfort of the passenger compartment is given priority, with battery discharging to increase internal temperature + the waste heat from the electric drive unit used for heating and temperature increase.

Late stage: low load of the passenger compartment, high load of the battery, heat pump absorbs the waste heat from the electric drive unit, with the comfort of the passenger compartment and the heating of the battery simultaneously met.

Under this control logic, the waste heat from the electric drive unit can be flexibly utilized, reducing the heating load of the system at each stage, and reducing the compressor power. The specific mode for mode switching can be as follows.

Step S815: judging whether the current outlet water temperature of the chiller chiller is higher than the actual environmental temperature. If the current outlet water temperature is higher than the actual environmental temperature, entering S816; otherwise, entering S808.

Step S816: judging whether the current outlet water temperature of the chiller chiller is higher than the actual environmental temperature and whether the current outlet water temperature is higher than the battery water temperature by 5°C. If the current outlet water temperature is higher than the actual environmental temperature and is higher than the battery water temperature by 5°C, entering S813; otherwise, entering S812.

In summary, the present disclosure can determine the optimal heating mode according to the current cold start parameters of the vehicle when an actual environmental temperature is less than the preset cold start temperature, thereby controlling the heat pump system to heat the vehicle according to the optimal heating mode, with the comprehensive parameters and the heating demand of the vehicle taken into consideration, integrating the heat management among the battery, electric drive unit, heater core, and environment, thus achieving comprehensive thermal management throughout the entire driving process based on the dynamic parameter changes during vehicle driving, so that the heat pump system operates in the efficient range to save heating energy consumption and improve vehicle range, and increase the driving experience of users.

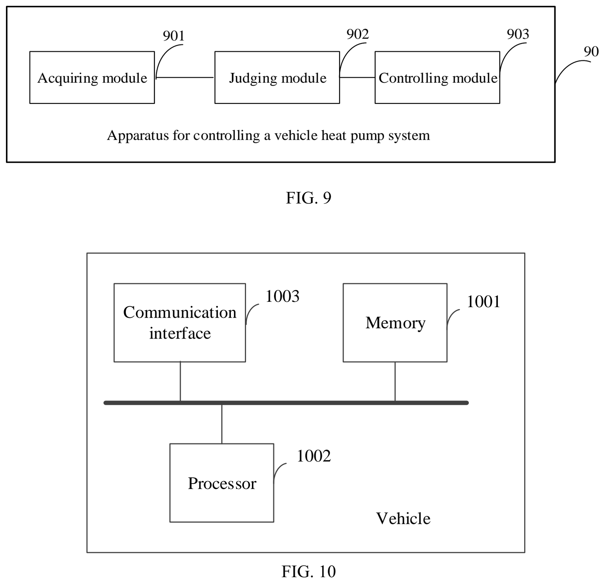

FIG. 9 is a schematic structural diagram of an apparatus for controlling a vehicle heat pump system provided by an embodiment of the present disclosure.

As shown in FIG. 9, an apparatus 90 for controlling a vehicle heat pump system includes: an acquiring module 901, a judging module 902, and a controlling module 903.

Specifically, the acquiring module 901 is configured to acquire an actual environmental temperature of a current environment where a vehicle is located; the judging module 902 is configured to judge whether the actual environmental temperature is less than a preset cold start temperature; the controlling module 903 is configured to, when the actual environmental temperature is less than the preset cold start temperature, acquire at least one current cold start parameter of the vehicle, determine an optimal heating mode of the vehicle according to the at least one current cold start parameter, and control the heat pump system to heat the vehicle according to the optimal heating mode.

Optionally, in an embodiment of the present disclosure, the at least one current cold start parameter includes at least one of current discharge power of a power battery, a current outlet water temperature of a chiller chiller, and a current water temperature of the power battery.

Optionally, in an embodiment of the present disclosure, the controlling module 903 includes: a first judging unit, a first response unit, and a second response unit.

The first judging unit is configured to judge whether a current battery discharge power of the vehicle is limited; the first response unit is configured such that when the current battery discharge power of the vehicle is limited, the optimal heating mode is to respond to a heating request of a passenger compartment and/or a battery; the second response unit is configured such that when the current battery discharge power of the vehicle is not limited, the optimal heating mode is to respond to a heating request of a passenger compartment.

Optionally, in an embodiment of the present disclosure, the controlling module 903 includes: a second judging unit, a first controlling unit, and a second controlling unit.

The second judging unit is configured to judge whether the current outlet water temperature is greater than the actual environmental temperature; the first controlling unit is configured to control the heat pump system to enter a first preset operation mode when the current outlet water temperature is less than or equal to the actual environmental temperature; the second controlling unit is configured to judge whether the current outlet water temperature meets a first preset temperature condition when the current outlet water temperature is greater than the environmental temperature, and control the heat pump system to enter a second preset operation mode when the current outlet water temperature does not meet the first preset temperature condition, otherwise control the heat pump system to enter a third preset operation mode; where compressor power consumption in the first preset operation mode is greater than compressor power consumption in the second preset operation mode, and the compressor power consumption in the second preset operation mode is greater than compressor power consumption in the third preset operation mode.

Optionally, in an embodiment of the present disclosure, the controlling module 903 includes: a third judging unit, a third controlling unit, and a fourth controlling unit.

The third judging unit is configured to judge whether the current outlet water temperature is greater than the actual environmental temperature; the third controlling unit is configured to control the heat pump system to enter a fourth preset operation mode when the current outlet water temperature is less than or equal to the actual environmental temperature; the fourth controlling unit is configured to judge whether the current outlet water temperature meets a second preset temperature condition when the current outlet water temperature is greater than the actual environmental temperature, and control the heat pump system to enter a fifth preset operation mode when the current outlet water temperature does not meet the second preset temperature condition, otherwise control the heat pump system to enter a third preset operation mode; where compressor power consumption in the fifth preset operation mode is greater than compressor power consumption in the fourth preset operation mode, and the compressor power consumption in the fourth preset operation mode is greater than compressor power consumption in the third preset operation mode.

Optionally, in an embodiment of the present disclosure, the controlling module 903 also includes: a fourth judging unit and a fifth controlling unit.

The fourth judging unit is configured to judge whether the current battery discharge power of the vehicle is limited when a current operation mode of the heat pump system is the fourth preset operation mode; the fifth controlling unit is configured to control the heat pump system to enter the first preset operation mode when the current discharge power meets or does not meet a preset battery management intervention condition.

Optionally, in an embodiment of the present disclosure, the controlling module 903 also includes: a fifth judging unit and a sixth controlling unit.

The fifth judging unit is configured to judge whether the current discharge power meets a preset battery management intervention condition when a current operation mode of the heat pump system is the fifth preset operation mode; the sixth controlling unit is configured to control the heat pump system to enter the second preset operation mode when the current discharge power meets or does not meet the preset battery management intervention condition.

It should be noted that the aforementioned explanation and illustration of embodiments of the method for controlling the vehicle heat pump system also apply to the apparatus for controlling the vehicle heat pump system of this embodiment. Therefore, no further elaboration is repeated here.

In summary, the present disclosure can determine the optimal heating mode according to the current cold start parameters of the vehicle when an actual environmental temperature is less than the preset cold start temperature, thereby controlling the heat pump system to heat the vehicle according to the optimal heating mode, with the comprehensive parameters and the heating demand of the vehicle taken into consideration, integrating the heat management among the battery, electric drive unit, heater core, and environment, thus achieving comprehensive thermal management throughout the entire driving process based on the dynamic parameter changes during vehicle driving, so that the heat pump system operates in the efficient range to save heating energy consumption and improve vehicle range, and increase the driving experience of users.

FIG. 10 is a schematic structural diagram of a vehicle in an embodiment of the present disclosure. The vehicle may include:
a memory 1001, a processor 1002, and a computer program stored in the memory 1001 and executable on the processor 1002.

When the processor 1002 executes the program, the method for controlling the vehicle heat pump system provided by the above embodiments is implemented.

Further, the vehicle also includes: a communication interface 1003, configured for communication between the memory 1001 and the processor 1002; the memory 1001, configured to store the computer program that can be executed on the processor 1002. The memory 1001 may include a high-speed RAM (Random Access Memory, random access memory) memory, or may also include a non-volatile memory, such as at least one magnetic disk memory.

If the memory 1001, the processor 1002 and the communication interface 1003 are independently implemented, the communication interface 1003, the memory 1001 and the processor 1002 can be interconnected through a bus and complete communication between each other. The bus can be an ISA (Industry Standard Architecture, industry standard architecture) bus, a PCI (Peripheral Component, peripheral component interconnect) bus or an EISA (Extended Industry Standard Architecture, extended industry standard architecture) bus, etc. The bus can be divided into address bus, data bus, control bus, etc. For the sake of simplicity, in FIG. 10, only a thick line is used for illustration, but it does not mean that there is only one bus or a specific type of bus.

Optionally, in a specific implementation, if the memory 1001, the processor 1002 and the communication interface 1003 are integrated on a single chip to implement, the memory 1001, the processor 1002 and the communication interface 1003 can complete communication with each other through an internal interface.

The processor 1002 may be a CPU (Central Processing Unit, central processing unit), or an ASIC (Application Specific Integrated Circuit, application specific integrated circuit), or one or more integrated circuits configured to implement the embodiments of the present disclosure.

The embodiment also provides a computer-readable storage medium on which a computer program is stored, and when the program is executed by the processor, the method for controlling the vehicle heat pump system as described above is implemented.

Furthermore, the term "first" and "second" are used merely for descriptive purposes and should not be construed as indicating or implying the relative importance, or implicitly specifying the quantity of the indicated technical features. Thus, the features defined as "first" or "second" can explicitly or implicitly include at least one such feature. In the description of the present disclosure, the term "multiple" means at least two, such as two, three, etc., unless there are explicit and specific limitations.

In the description of this specification, the terms such as "an embodiment", "some embodiments", "example", "specific example", or "some examples" indicate that the specific features, structures, materials or characteristics described in connection with such an embodiment or example are included in at least one embodiment or example of the present disclosure. In the specification, the illustrative expressions of the above terms are not necessarily referring to the same embodiment or example. Moreover, the specific features, structures, materials or characteristics can be combined in an appropriate manner in any one or more embodiments or examples. Additionally, under a condition that there are no contradictions, the technical personnel in the field can combine and integrate the different embodiments or examples described in this specification and the features of different embodiments or examples.

Although the embodiments of the present disclosure have been shown and described above, it should be understood that these embodiments are illustrative and should not be construed as limiting the present disclosure. Those of ordinary skill in the field can make changes, modifications, substitutions and variations to the above embodiments within the scope of the present disclosure.

## Claims

1. A method for controlling a vehicle heat pump system, comprising following steps:
acquiring an actual environmental temperature of a current environment where a vehicle is located;
judging whether the actual environmental temperature is less than a preset cold start temperature; and
if the actual environmental temperature is less than the preset cold start temperature, acquiring at least one current cold start parameter of the vehicle, determining an optimal heating mode of the vehicle according to the at least one current cold start parameter, and controlling the heat pump system to heat the vehicle according to the optimal heating mode.

2. The method according to claim 1, wherein the at least one current cold start parameter comprises at least one of current discharge power of a power battery, a current outlet water temperature of a chiller chiller, and a current water temperature of the power battery.

3. The method according to claim 2, wherein the determining the optimal heating mode of the vehicle according to the at least one current cold start parameter comprises:
judging whether a current battery discharge power of the vehicle is limited;
if the current battery discharge power of the vehicle is limited, the optimal heating mode is to respond to a heating request of a passenger compartment and/or a battery;
if the current battery discharge power of the vehicle is not limited, the optimal heating mode is to respond to a heating request of a passenger compartment.

4. The method according to claim 3, wherein in a case of responding to the heating request of the passenger compartment and/or the battery, the controlling the heat pump system to heat the vehicle according to the optimal heating mode comprises:
judging whether the current outlet water temperature is greater than the actual environmental temperature;
if the current outlet water temperature is less than or equal to the actual environmental temperature, controlling the heat pump system to enter a first preset operation mode;
if the current outlet water temperature is greater than the environmental temperature, judging whether the current outlet water temperature meets a first preset temperature condition, and when the current outlet water temperature does not meet the first preset temperature condition, controlling the heat pump system to enter a second preset operation mode, otherwise controlling the heat pump system to enter a third preset operation mode;
wherein compressor power consumption in the first preset operation mode is greater than compressor power consumption in the second preset operation mode, and the compressor power consumption in the second preset operation mode is greater than compressor power consumption in the third preset operation mode.

5. The method according to claim 3, wherein in a case of responding to the heating request of the passenger compartment, the controlling the heat pump system to heat the vehicle according to the optimal heating mode comprises:
judging whether the current outlet water temperature is greater than the actual environmental temperature;
if the current outlet water temperature is less than or equal to the actual environmental temperature, controlling the heat pump system to enter a fourth preset operation mode;
if the current outlet water temperature is greater than the actual environmental temperature, judging whether the current outlet water temperature meets a second preset temperature condition, and when the current outlet water temperature does not meet the second preset temperature condition, controlling the heat pump system to enter a fifth preset operation mode, otherwise controlling the heat pump system to enter a third preset operation mode;
wherein compressor power consumption in the fifth preset operation mode is greater than compressor power consumption in the fourth preset operation mode, and the compressor power consumption in the fourth preset operation mode is greater than compressor power consumption in the third preset operation mode.

6. The method according to claim 5, in a case of responding to a heating instruction of the passenger compartment, the controlling the heat pump system to heat the vehicle according to the optimal heating mode further comprises:
when a current operation mode of the heat pump system is the fourth preset operation mode, judging whether the current battery discharge power of the vehicle is limited;
if the current discharge power meets or does not meet the preset battery management intervention condition, controlling the heat pump system to enter the first preset operation mode.

7. The method according to claim 5, wherein in a case of responding to the heating instruction of the passenger compartment, the controlling the heat pump system to heat the vehicle according to the optimal heating mode further comprises:
when a current operation mode of the heat pump system is the fifth preset operation mode, judging whether the current discharge power meets the preset battery management intervention condition;
if the current discharge power meets or does not meet the preset battery management intervention condition, controlling the heat pump system to enter the second preset operation mode.

8. An apparatus for controlling a vehicle heat pump system, comprising:
an acquiring module, configured to acquire an actual environmental temperature of a current environment where a vehicle is located;
a judging module, configured to judge whether the actual environmental temperature is less than a preset cold start temperature; and
a controlling module, configured to, when the actual environmental temperature is less than the preset cold start temperature, acquire at least one current cold start parameter of the vehicle, determine an optimal heating mode of the vehicle according to the at least one current cold start parameter, and control the heat pump system to heat the vehicle according to the optimal heating mode.

9. A vehicle, comprising: a memory, a processor, and a computer program stored in the memory and executable on the processor, wherein the processor executes the program to implement the method for controlling the vehicle heat pump system according to any one of claims 1 to 7.

10. A computer-readable storage medium, wherein the computer-readable storage medium stores a computer program, when the program is executed by a processor, the method for controlling the vehicle heat pump system according to any one of claims 1 to 7 is implemented.
